Europäisches Patentamt

European Patent Office

Office européen des brevets

(11) Veröffentlichungsnummer: **0 214 504**

**A2**

# EUROPÄISCHE PATENTANMELDUNG

(21) Anmeldenummer: 86111361.1

(22) Anmeldetag: 18.08.86

(51) Int. Cl.⁴: **H04N 1/028**

(30) Priorität: 28.08.85 DE 3530641

(43) Veröffentlichungstag der Anmeldung:
18.03.87 Patentblatt 87/12

(84) Benannte Vertragsstaaten:
AT BE CH DE FR GB IT LI LU NL SE

(71) Anmelder: STUKENBROCK, Heiner
Niedersachsenstrasse 40
D-3012 Langenhagen 1(DE)

(72) Erfinder: STUKENBROCK, Heiner
Niedersachsenstrasse 40
D-3012 Langenhagen 1(DE)

(74) Vertreter: Junius, Walther, Dr.
Wolfstrasse 24
D-3000 Hannover 81(DE)

(54) Vorrichtung zur punktförmigen Beleuchtung, insbesondere bei linienweiser Abtastung von Flächenbildinhalten.

(57) Die Erfindung betrifft eine Vorrichtung zur punktförmigen Beleuchtung, insbesondere bei linienweiser Abtastung von Flächenbildinhalten und Umwandlung in elektrische Signale, bestehend aus einem einen focussierten Lichtstrahl in zum Bild geführte Lichtleiter einleitenden Lichtgeber, bei dem die Eintrittsflächen der Lichtleiter in einem Kreis angeordnet sind, in dessen Zentrum ein Drehspiegel rotierend angeordnet ist, in dessen Drehachse der Lichtstrahl einer Lichtquelle verläuft und im Falle der linienweisen Abtastung aus einem Lichtaufnehmer, dessen vom Bild zu einer Lichtimpulse in elektrische Signale wandelnden Vorrichtung geführten Lichtleitern, deren bildseitige Enden unmittelbar neben den bildseitigen Enden der vom Lichtgeber kommenden Lichtleitfasern angeordnet sind. Es ist die Aufgabe der Erfindung, eine besonders einfache Möglichkeit für den Aufbau einer Vorrichtung zur punktförmigen Beleuchtung von Flächenbildinhalten zu erreichen, bei der von ein und demselben rotierenden Lichtpunkt auch Steuerungsfunktionen für den den Drehspiegel tragenden Rotor als auch für nachfolgende Schaltungen und Geräte ableitbar sind. Die Erfindung besteht darin, daß die Lichtleitfasern (3) des Lichtgebers abschnittsweise parallel in einer Reihe nebeneinander in Form von flachen Bändern (12) angeordnet sind, daß die Endteile dieser Bänder - (12) radial im Lichtgeber angeordnet sind und daß eine Vorrichtung zur zeitlichen Zuordnung des Lichteintritts in bestimmte Lichtleitfasern (17) vorgesehen ist.

## Vorrichtung zur punktförmigen Beleuchtung, insbesondere bei linienweiser Abtastung von Flächenbildinhalten

Die Erfindung betrifft eine Vorrichtung zur punktförmigen Beleuchtung, insbesondere bei linienweiser Abtastung von Flächenbildinhalten und Umwandlung in elektrische Signale, bestehend aus einem einen focussierten Lichtstrahl in zum Bild geführte Lichtleiter einleitenden Lichtgeber, bei dem die Eintrittsflächen der Lichtleiter in einem Kreis angeordnet sind, in dessen Zentrum ein Drehspiegel rotierend angeordnet ist, in dessen Drehachse der Lichtstrahl einer Lichtquelle verläuft und in Falle der linienweisen Abtastung aus einem Lichtaufnehmer, dessen vom Bild zu einer Lichtimpulse in elektrische Signale wandelnden Vorrichtung geführten Lichtleitern, deren bildseitige Enden unmittelbar neben den bildseitigen Enden der vom Lichtgeber kommenden Lichtleitfasern angeordnet sind.

Zeilenabtaster, die mit focussiertem Laserlicht arbeiten, sind für elektrostatische Laserdrucker, für das abtastende punktweise Belichten von Foto-oder Reprofilm und für das Aufnehmen von Dokumentenbildinhalten und deren Umwandlung in elektrische Signale in Gebrauch.

Ein solcher Zeilenabtaster mit punktförmiger Beleuchtung weist in einem Kreis angeordnete Lichtleiterenden auf, die von einem Drehspiegel beleuchtet werden, welcher seinerseits mittels eines Lasers, dessen Strahl in der Drehspiegelachse verläuft, sein Licht erhält. Die Lichtleiter sind zum beleuchteten Objekt geführt und dort sind ihre anderen Enden in einer Zeile angeordnet. Durch die Lichtführung über den Drehspiegel wird eine exakt nacheinander erfolgende Beleuchtung jedes einzelnen Lichtleiters erreicht, so daß sukzessive nacheinander alle in der Linie liegenden Punkte des Flächenbildes abgetastet werden. Da die einzelnen Lichtleiter einen sehr dünnen Durchmesser aufweisen müssen, wenn das Auflösungsvermögen hoch sein soll, ist eine sehr große Anzahl von Lichtleitern erforderlich, deren Montage außerordentlich arbeitsaufwendig ist.

Der in dieser Vorrichtung bei der Rotation des Drehspiegels ständig kreisende, die Eingangsenden der Lichtleiter beleuchtende Lichtfleck macht es erforderlich, daß besondere Arbeitsmittel für die Feststellung seiner augenblicklichen Lage vorgesehen werden, die mit Synchronisations-und Steuerschaltungen für den Vorschub des abzutastenden Flächenbildes relativ zur Zeile der Lichtleiterenden vorgesehen werden.

Eine magnetische Aufhängung und Stabilisierung des Drehspiegels macht es erforderlich, eine Messung für dessen Kippauslenkung vorzusehen. Gemäß der europäischen Patentanmeldung 86 1o

1840.6 kann für die Messung der Kippauslenkung eines magnetisch gelagerten Rotors ein an diesem Rotor angebrachter Spiegel verwendet werden, der in seiner Drehachse Licht eines Lasers empfängt und dieses Licht auf im Kreis angeordnete Lichtleitfasern wirft, die zu Empfängern geführt sind, die einfallende Lichtimpulse in elektrische Impulse wandeln. Diese elektrischen Impulse dienen der Steuerung von Magneten, die den Rotor - schwebend halten.

Die Erfindung vermeidet die Nachteile des Standes der Technik. Es ist die Aufgabe der Erfindung, eine besonders einfache Möglichkeit für den Aufbau einer Vorrichtung zur punktförmigen Beleuchtung von Flächenbildinhalten zu erreichen, bei der von ein und demselben rotierenden Lichtpunkt auch Steuerungsfunktionen für den den Drehspiegel tragenden Rotor als auch für nachfolgende Schaltungen und Geräte ableitbar sind.

Die Erfindung besteht darin, daß die Lichtleitfasern des Lichtgebers abschnittsweise parallel in einer Reihe nebeneinander in Form von flachen Bändern angeordnet sind, daß die Endteile dieser Bänder radial im Lichtgeber angeordnet sind, und daß eine Vorrichtung zur zeitlichen Zuordnung des Lichteintritts in bestimmte Lichtleitfasern vorgesehen ist.

Die Herstellung von Bändern, in denen Lichtleitfasern in einer Reihe nebeneinander angeordnet und durch ein Bindemittel miteinander verbunden sind, ist fabrikationstechnisch ohne besonders großen Aufwand möglich. Die Montage der Vorrichtung zur punktförmigen Beleuchtung wird durch die Verwendung derartiger Lichtleiterbänder besonders einfach, denn nun können mit demselben zeitlichen Aufwand, mit dem bisher Lichtleiter einzeln montiert werden mußten, die ganze Viel zahl von zu einem Band zusammengefaßten Lichtleitern montiert werden. Diese Art der Montage der Lichtleiter bringt den Vorteil mit sich, daß weitere Lichtleiter, die nicht zur punktförmigen Beleuchtung von Flächenbildern benutzt werden, sondern zur zeitlichen Zuordnung des Lichteintritts in bestimmte Lichtleitfasern benötigt werden, um Steuerungsvorgänge, sei es für die Messung der Kippauslenkung des magnetisch gelagerten. den Drehspiegel tragenden Rotors, sei es für die Erzeugung von elektrischen Impulsen zur Steuerung eines Bildwiedergabegerätes, auszuführen, unmittelbar neben oder insbesondere zwischen Lichtleiterbändern anzuordnen. Diese Anordnung macht den Aufbau der gesamten Vorrichtung besonders einfach.

Die Lichtleiter können an ihrer Lichteintrittsfläche senkrecht zur Bandachse geschnitten sein. Dann sind die Lichteintrittsenden der einzelnen Lichtfasern in Form eines Polygons rings um die Drehspiegelachse angeordnet. Bei dieser Anordnung treten kaum feststellbare Abweichungen der Beleuchtungszeit und Beleuchtungsintensität der Lichteintrittsenden der einzelnen Lichtleiter auf, die man dadurch vermindern kann, daß die lichtgeberseitigen Enden der Lichtleiterbänder die Form eines Kreissegmentes aufweisen.

Die Vorrichtung zur zeitlichen Zuordnung des Lichteintritts in bestimmte Lichtleitfasern besteht aus gesonderten Lichtsensoren. Erfindungsgemäß ist es zweckmäßig, wenn neben und/oder in Lücken zwischen zwei Lichtleitern, vorzugsweise zwischen zwei Lichtleiterbändern, diese Lichtsensoren oder zu diesen Lichtsensoren führende Lichtleiter angeordnet sind, wobei die Lichtsensoren Teil einer Steuerungsanlage für ein elektrische Impulse in ein Bild wandelndes Wiedergabegerät und/oder für die Steuerung der den Drehspiegelrotor haltenden Magnete sind.

Die Vorrichtung zur zeitlichen Zuordnung des Lichteintritts in bestimmte Lichtleitfasern kann aber auch anders realisiert werden, und zwar dadurch, daß neben dem Lichtaustrittsende von Lichtleitern des Lichtgebers eine Licht in das Lichteintrittsende von Lichtleitern des Lichtaufnehmers reflektierende Fläche neben dem abzutastenden Bild angeordnet ist und daß an die Lichtimpulse in elektrische Signale wandelnde Vorrichtung eine elektrische Schaltung angeschlossen ist, welche einen Zählkreis und einen Schwellenwertkreis aufweist und eine Zuordnung von Bildflächenpunkten zu elektrischen Steuerimpulsen vollzieht. Derartige reflektierende Flächen werfen auch dann, wenn der abzutastende Bildpunkt völlig schwarz ist, einen Lichtimpuls geringer Intensität in die lichtaufnehmende Faser. Der an diese lichtaufnehmende Faser angeschlossene Wandler, der Lichtimpulse in elektrische Impulse wandelt, erzeugt dann auch bei völlig schwarzem Bildpunkt einen elektrischen Impuls geringer Intensität, der zu Steuerungszwecken ausgenutzt werden kann, aber mit einer Schwellenwertschaltung für eine Weiterverarbeitung in einer Bildwiedergabevorrichtung ausgeschlossen werden kann.

Baulich wird die Vorrichtung sehr einfach, wenn die Reflexionsflächen metallische oder dielektrische Spiegelflächen sind oder wenn die Hilfsreflexionsflächen Grenzflächen von optisch dichteren zu optisch dünneren transparenten Medien sind, die der dort nicht reflektierte Teil des Lichtes in Richtung auf die zu beleuchtende Hauptbeleuchtungsfläche hin passiert.

Eine weitere Möglichkeit der Realisierung der Vorrichtung zur zeitlichen Zuordnung des Lichteintritts in bestimmte Lichtleitfasern besteht darin, daß die Abstände zwischen je zwei Lichtleitbändern unterschiedlich groß gewählt sind und daß an die Lichtimpulse in elektrische Signale wandelnde Vorrichtung eine elektrische Schaltung angeordnet ist, welche aus den Abständen von Lichtimpulsfolgen eine zeitliche Zuordnung von Bildflächenpunkten zur elektrischen Steuerimpulsen vollzieht. Durch absichtlich in bestimmtem Abstand gelassene Lücken zwischen den Lichtleiterbändern läßt sich somit diese zeitliche Zuordnung vollziehen.

Sind zusätzliche Lichtleiter, die zu besonderen Sensoren führen, außerhalb des Kreises der Lichteintrittsenden angeordnet, ist es zweckmäßig, wenn der Beleuchtungsfleck im Bereich der Lichtleiter des Lichtgebers und der Sensoren bzw. der zu diesen führenden Lichtleiter in Drehrichtung einen kleineren Durchmesser als in zur Drehachse paralleler Richtung hat.

Für die Messung der Kippauslenkung des Drehspiegelrotors ist es zweckmäßig, wenn an mindestens drei Stellen im durch die Stirnseiten der Lichtleiter des Lichtgebers gebildeten Polygon oder Kreis mehrere Lichtfleckpositionssensoren oder zu ihnen führende Lichtleiter in Drehrichtung aufeinander folgend und in zur Spie gelachse paralleler Richtung zunehmend versetzt gegen die Polygon- oder Kreisebene angeordnet sind, die vorzugsweise von einer Schlitzblende bedeckt sind, deren Schlitz mit der Richtung der Sollbahn des Beleuchtungsflecks einen Winkel größer als 0° und kleiner als 90° bildet.

Für die getrennte Erzeugung von Lichtimpulsen für die Beleuchtung einerseits und für die Steuerung andererseits kann es zweckmäßig sein, daß die Lichtquelle für die Bildbeleuchtung ein Laser und die Lichtquelle für die Messung der jeweiligen Lichtfleckposition ein zweiter Laser mit vom ersten Bildelementbeleuchtungslaser verschiedener Wellenlänge ist, dessen Strahlengang in den Strahlengang des ersten Lasers eingeführt ist und daß zwischen dem Lichtaufnehmer und dem Lichtwandler Lichtfilter für die Trennung der Lichtanteile unterschiedlicher Wellenlänge angeordnet sind. Mit einer derartigen Vorrichtung lassen sich aus einzelnen bestimmten Lichtleitern die Lichtanteile verschiedener Wellenlänge herausfiltern und in unterschiedlichen Sensoren im einen Falle für Steuerungszwecke, im anderen Falle für Beleuchtungszwecke heraustrennen.

Diese Vorrichtung läßt sich auch benutzen, um Belichtungsvorgänge vorzunehmen, wenn die zu beleuchtende Hauptfläche Teil einer elektrisch aufzuladenden Schicht eines Druckers oder eines Filmes oder Fotopapieres eines Plotters oder Lichtsatzgerätes ist.

Das Wesen der Erfindung ist nachstehend anhand von in der Zeichnung schematisch dargestellten Ausführungsbei spielen näher erläutert. Es zeigen:

Fig. 1 einen Schnitt durch die Vorrichtung,

Fig. 2 eine Ansicht von oben auf die Anordnung der Lichtleiter des Lichtgebers, bei dem die Stirnen der Lichtleiterbänder in Polygonform angeordnet sind,

Fig. 3 eine Ansicht von oben auf die Anordnung der Lichtleiter des Lichtgebers, bei dem die Lichtleiter-Eingangsflächen in Kreisform angeordnet sind,

Fig. 4 eine Ansicht der Anordnung von Lichtleiterstirnseiten,

Fig. 5 eine Anordnung von Lichtleiterstirnseiten, von denen die untere Reihe Teile der Beleuchtungsvorrichtung, die oberen zu Sensoren führende Lichtleiter sind,

Fig. 6 eine Anordnung von Beleuchtungs- und Sensorlichtleiterstirnseiten in anderer Form,

Fig. 7 die Anordnung von Beleuchtungslichtleiterstirnseiten und der Stirnseiten von Lichtleitern, die zu Sensoren zur Feststellung von Kippauslenkungen des Rotors mit dem Beleuchtungsspiegel dienen,

Fig. 8 eine Anordnung ähnlich der Fig. 7 mit einer Schlitzblende,

Fig. 9 die Anordnung der Enden eines Lichtgeber-Lichtleiters und eines Lichtaufnehmer-Lichtleiters mit einem Hilfsspiegel,

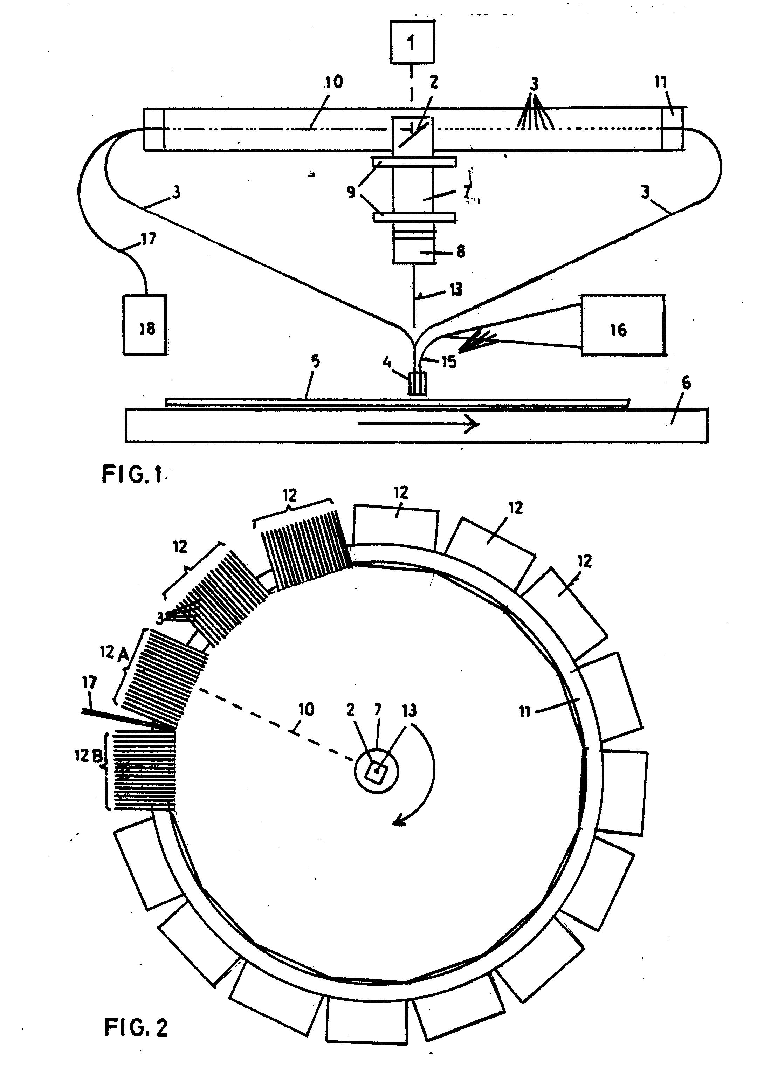

Fig. 1o eine Anordnung der Enden eines Lichtgeber-Lichtleiters und eines Lichtaufnehmer-Lichtleiters mit einer durchsichtigen Fläche als Hilfsspiegel,

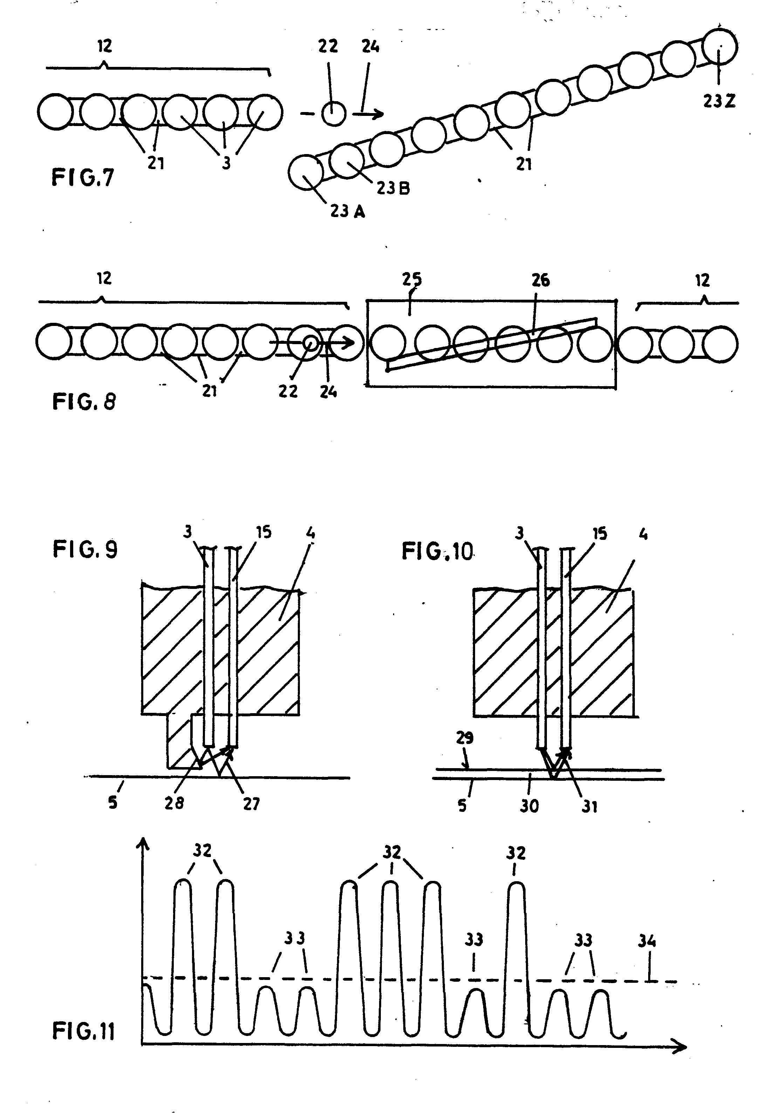

Fig. 11 eine Impulsfolge, wie sie im Ausführungsbeispiel der Fig. 9 und 1o am Ausgang des Wandlers erscheint, der die Lichtimpulse in elektrische Impulse umsetzt.

In Fig. 1 ist eine Vorrichtung für die punktförmige Beleuchtung zur linienweisen Abtastung von Flächenbildinhalten und Umwandlung in elektrische Signale gezeigt. Diese Vorrichtung besteht aus einer Lichtquelle 1, vorzugsweise einem Laser, einem Drehspiegel 2, und einer Vielzahl von faserförmigen Lichtleitern 3, die zu einer Leiste 4 geführt sind, in der sie gehaltert werden, und zwar so, daß ihre Austrittsstirnseite auf das Flächenbild 5 gerichtet ist. Dieses Flächenbild 5 liegt auf einem Träger 6, welcher relativ zur Leiste 4, z.B. in Pfeilrichtung, bewegbar ist.

Der Drehspiegel 2 ist von einem Rotor 7 getragen, welcher frei schwebend in einem Magnetfeld angeordnet ist und zwar in dem Magnetfeld des Tragmagneten8 und im Magnetfeld von mindestens zwei Halterungsmagneten 9, welche den Rotor 7 in seiner axialen Lage halten und gleichzeitig als Antriebsmagneten dienen, um den Rotor 7 in seine Rotationsbewegung zu versetzen. Die Halterungsmagneten 9 sind durch eine Steuervorrichtung in der Stärke ihres Magnetfeldes gesteuert. Die Steuerungsvorrichtung weist eine Meßvorrichtung für Kippauslenkungen des Rotors 7 aus seiner idealen Achslage auf.

Der Lichtstrahl 1o verläuft von der Lichtquelle 1 über den Drehspiegel 2 zu den Stirnseiten einer Vielzahl von Lichtleitern 3, die in einer kreisrunden Halterung 11 gehaltert sind. Im Zentrum dieser kreisrunden Halterung 11 befindet sich die Drehachse des Rotors 7 und der von der Lichtquelle 1 kommende Lichtstrahl 10.

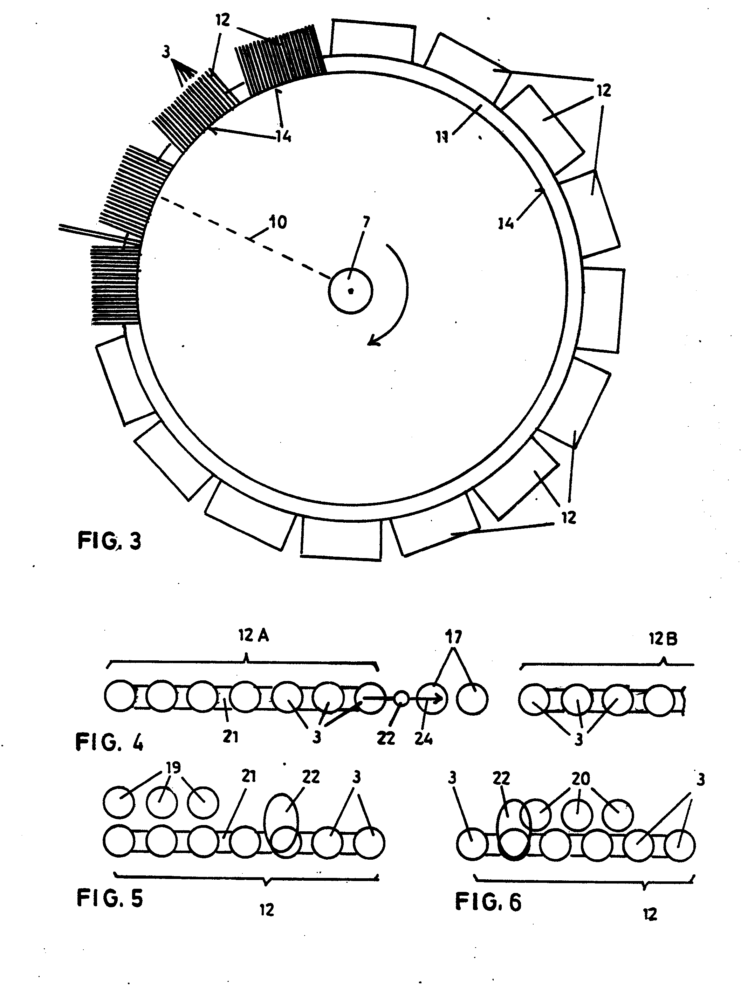

Da zur Erzielung einer hohen Auflösung jeder Lichtleiter einen sehr geringen Durchmesser aufweisen muß, sind in der kreisförmigen Halterung 11 sehr viele Lichtleiter 3 anzuordnen. Um diese leichter montieren zu können, werden jeweils mehrere Lichtleiter parallel zueinander angeordnet und durch ein Bindemittel miteinander verbunden, so daß sie ein flaches Lichtleiterband 12 bilden, wie es in Fig. 2 und 3 zu sehen ist. Die dem Flächenbild 5 zugewandte Stirnseite ist exakt senkrecht zur Lichtleiterachse bzw. zu den Achsen der einzelnen Lichtleiter geschnitten. Wie Fig. 2 zeigt, kann auch die andere, dem Drehspiegel 2 zugewandte Stirnseite in dieser Weise senkrecht zur Lichtleiterbandachse geschnitten sein. Die Stirnseiten der einzelnen Lichtleiter 3 sind dann in Art eines Polygons ringsum die Drehachse 13 angeordnet. Im Ausführungsbeispiel der Fig. 3 hingegen sind die dem Drehspiegel 2 zugewandten Stirnseiten der Lichtleiterbänder 12 kreissegmentförmig geschnitten, so daß sämtliche Stirnseiten der Lichtleiter 3 auf einem Kreisbogen 14 liegen.

In der Leiste 4 ist eine zweite Reihe von Lichtleitern 15 angeordnet, die als Lichtaufnehmer dienen und zu einem Sensor 16, vorzugsweise ein Fotomultiplier, geführt sind. Neben den der Beleuchtung des Flächenbildes 5 dienenden Lichtleitern 3 und den der Abtastung dienenden Lichtleiter 15 sind noch weitere Lichtleiter 17 vorgesehen, die zu einem Sensor 18 führen, an den das Steuergerät für die Steuerung der Halterungsmagneten 9 angeschlossen ist. Diese Lichtleiter 17 sind zwischen zwei Lichtleiterbändern 12A, 12B in der Halterung 11 angeordnet. In ähnlicher Weise können noch weitere Lichtleiter 17 oder 19 oder 2o vorgesehen sein, welche anderen Steuerungszwecken, z.B. der Synchronisation eines Wiedergabegerätes dienen.

Im Ausführungsbeispiel der Fig. 4 sind die Stirnseiten von Lichtleitern 3 und 17 dargestellt. Die Lichtleiter 3 auf der linken Seite sind zu einem Lichtleiterband 12A durch ein Bindemittel 21 zusammengefaßt, während die auf der rechten Seite sichtbaren Lichtleiter 3 durch ein Bindemittel 21 zu dem Lichtleiterband 12B zusammengefaßt sind.

Zwischen den beiden Lichtleiterbändern 12A, 12B sind Lichtleiter 17 angeordnet, welche zu einem Sensor geführt sind. Dieser Sensor kann z.B. eine Synchronisation des Zeilenanfanges im Wiedergabegerät bewirken. -Es besteht aber auch die Möglichkeit, einen Zeilenanfang auch ohne Lichtleiter 17 zu markieren, und zwar allein durch den Abstand zwischen zwei Lichtleiterbändern 12A, 12B. Denn im Fotomultiplier 16 treten beim Fehlen von Lichtleitern zwischen mit Abstand voneinander angeordneten Lichtleiterbändern 12A und 12B überhaupt keine Impulse auf, solange der Lichtfleck 22 des Lichtstrahles 1o nicht auf eine Stirnseite eines Lichtleiters 3 trifft, sondern nur auf den lichtleiterfreien Raum zwischen den Lichtleiterbändern 12A und 12B.

Wie Fig. 5 zeigt, können für Steuerungszwecke neben den Lichtleitern 3 eines Lichtleiterbandes 12 Lichtleiter 19 angeordnet sein, die Steuerungszwecken dienen. Diese Lichtleiter 19 können exakt vertikal über den Lichtleitern 3 angeordnet sein, oder sie können auf Lücke versetzt wie die Lichtleiter 2o in Fig. 6 angeordnet sein. Bei diesen beiden Anordnungen der Fig. 5 und 6 ist es zweckmäßig, wenn der Lichtfleck bzw. Beleuchtungsfleck 22 in Drehrichtung einen kleineren Durchmesser als in zur Drehachse paralleler Richtung hat, wobei der Durchmesser in Drehrichtung etwa dem Durchmesser eines Lichtleiters entspricht, während der Durchmesser senkrecht hierzu mindestens doppelt so groß ist.

Wie die Anordnung der Lichtleiter in der Halterung 11 erfolgt, wenn zwischen zwei Lichtleiterbänder Lichtleiter für die ständige Selbstjustierung der richtigen Achsrichtung des Rotors 7 angeordnet werden, zeigen die Fig. 7 und 8. Im Ausführungsbeispiel der Fig. 7 schließt sich an die Lichtleiter 3 des Lichtleiterbandes 12 eine Reihe von weiteren Lichtleitern 23 an, deren Stirnseiten in einer Reihe angeordnet sind, die schräg unter einem geringen spitzen Winkel gegenüber der Bahn 24 des Beleuchtungsflecks 22 verläuft. Diese Lichtleiter 23 können wiederum durch ein Bindemittel zu einem Lichtleiterband miteinander verbunden sein. Dieses Lichtleiterband ist mit seinem eingangsseitigen Ende schräg zur Bahn 24 des Beleuchtungsflecks 22 angeordnet. Bei dieser Anordnung der Lichtleiter 23 fällt in die Lichtleiter 23 A und 23Z überhaupt kein Licht, wenn der Beleuchtungsfleck 22 sich auf seiner optimalen Bahn befindet. Weicht der Rotor 7 aus seiner optimalen Achsenlage ab, so läuft der Beleuchtungsfleck 22 auf einer anderen Bahn, die etwas zu der Bahn 24 versetzt ist. Ist diese Bahn z.B. an dem betrachteten Ort etwas höher als die Bahn 24, dann werden die Lichtleiter 23A und 23B überhaupt kein Licht empfangen, während der Lichtleiter 23Z Licht empfängt. Sensoren und eine nachgeschaltete Auswertschaltung vermag aus den beleuchteten und unbeleuchteten Lichtleitern 23 einen Rückschluß über die Lage der jeweiligen Bahn 24 des Beleuchtungsflecks 22 auf die Abweichung des Rotors 7 von der idealen Achslage zu schließen und Steuerungsimpulse an die Magnete 9 abzugeben, welche den Rotor 7 wieder in seine ideale Achsstellung bringen.

Im Ausführungsbeispiel der Fig. 8 ist der Beleuchtungsfleck 22 in seinem Durchmesser klein gegenüber dem Durchmesser der einzelnen Lichtleiter 3, 23. Vor den Lichtleitern 23 ist eine Blende 25 mit einem schräg angeordneten Schlitz 26 angeordnet. Diese Anordnung erfolgt so, daß bei optimaler Bahn 24 des Bleuchtungsflecks 22 kein Licht durch den Schlitz 26 auf die Lichtleiter 23A, 23Z fallen kann. Erst bei Abweichungen von der optimalen Bahn 24 erhalten diese Lichtleiter Licht, welches wie beim Ausführungsbeispiel der Fig. 7 ausgewertet und zu Steuerungszwecken herangezogen wird.

Im Ausführungsbeispiel der Fig. 9 ist gezeigt, wie in der Leiste 4 neben einem Lichtgeber-Lichtleiter 3 ein Lichtempfänger-Lichtleiter 15 angeordnet ist. Die Stirnseiten dieser beiden Lichtleiter 3, 15 sind dicht über der Vorlage 5 angeordnet. Sobald der Beleuchtungsfleck 22 den Lichtleiter 3 trifft, erscheint an der Stirn siete des Lichtleiters 3 ein die Vorlage 5 punktförmig beleuchtender Lichtimpuls, der entsprechend dem Schwärzungsgrad der Bildvorlage 5 mit dem Lichtstrahl 27 reflektiert wird. Anstelle von an einzelnen Stellen des Kreises angeordneten Lichtleitern 17 sind an bestimmten Stellen der Leiste 4 Spiegel 28 angeordnet, welche aus dem Lichtleiter 3 kommendes Licht direkt in den Lichtleiter 15 reflektieren. Diese Spiegel 28 erfassen nur einen geringen Teil der Strahlung, der aber so groß ist, daß dieser in den Lichtleiter 15 reflektierte Strahl vom Spiegel 28 noch in einem Fotomultiplier erfaßt werden kann. Sind die Spiegel 28 nur an bestimmten Stellen angeordnet, so sind auf diese Weise die mit Spiegel versehenen Stellen der Leiste 4 markiert und die hier erhaltenen geringen Lichtimpulse können für Steuerungsvorgänge des Wiedergabegerätes benutzt werden. Ist jedoch der Spiegel längs der gesamten Leiste 4 angeordnet, dann können die erhaltenen geringfügigen Reflektionen vom Spiegel 28 für die Prüfung benutzt werden, ob sämtliche Lichtleiter noch in einwandfrei leitendem Zustand sind.

In Fig. 1o ist eine ähnliche Anordnung getroffen, jedoch ist hier oberhalb der Bildvorlage 5 eine durchsichtige, jedoch schwach reflektierende Fläche, wie z.B. eine Glasplatte, angeordnet. Auch hier fällt bei weißem Abtastpunkt auf der Vorlage 5 ein Lichtstrahl 27 direkt von der Vorlage in den Lichtleiter 15 und von der reflektierenden Fläche 29 der Glasplatte 3o ein reflektierter Lichtstrahl 31.

In Fig. 11 ist ein am Ausgang des Sensors (Fotomultipliers) erhaltenes Diagramm gezeigt, und zwar am Ausgang des Fotomultipliers erhaltene Spannung V in Abhängigkeit von der Zeit t. Hier sind einige große Impulse 32 sichtbar, welche von reflektierenden Stellen der Vorlage 5 herrühren. Dazwischen befinden sich Stellen mit kleinen Impulsen 33, die von Reflexionen am Spiegel 28 oder an der reflektierenden Fläche 29 der Glasplatte 3o herrühren. Diese zeigen, daß die Lichtleitung in den betreffenden Lichtleitern 3, 15 in Ordnung ist und können für Steuerungszwecke, insbesondere Synchronisationszwecke, herangezogen werden. Sie liegen alle unter einer Spannungsschwelle 34, so daß sie mit elektrischen Mitteln leicht abtrennbar sind. Für die Belichtung im Wiedergabegerät dienen nur Impulse, welche oberhalb der Schwelle 34 liegen. Alle Impulse und Impulsteile unterhalb der Spannungsschwelle 34 dienen lediglich der Synchronisation und Steuerung des Wiedergabegerätes.

Bezugsziffern

1 Lichtquelle

2 Drehspiegel

3 Lichtleiter

4 Leiste

5 Flächenbild

6 Träger

7 Rotor

8 Tragmagneten

9 Halterungsmagneten

lo Lichtstrahl

ll Halterung

l2 Lichtleiterband

l3 Drehachse

l4 Kreisbogen

l5 Lichtleiter

l6 Sensor

l7 Lichtleiter

l8 Sensor

l9 Lichtleiter

2o Lichtleiter

21 Bindemittel

22 Lichtfleck

23 Lichtleiter

24 Bahn

25 Blende

26 Schlitz

27 Lichtstrahl

28 Speigel

29 reflektierende Fläche

3o Glasplatte

3l reflektierter Lichtstrahl

32 Impuls

33 Impuls

34 Spannungsschwelle

**Ansprüche**

1. Vorrichtung zur punktförmigen Beleuchtung, insbesondere bei linienweiser Abtastung von Flächenbildinhalten und Umwandlung in elektrische Signale, bestehend aus

einem einen focussierten Lichtstrahl in zum Bild geführten Lichtleitern einleitenden Lichtgeber, bei dem die Eintrittsflächen der Lichtleiter in einem Kreis angeordnet sind, in dessen Zentrum ein Drehspiegel rotierend angeordnet ist, in dessen Drehachse der Lichtstrahl einer Lichtquelle verläuft,

und bei der linienweisen Abtastung aus einem Lichtaufnehmer, dessen vom Bild zu einer Lichtimpulse in elektrische Signale wandelnden Vorrichtung geführten Lichtleitern, deren bildseitigen Enden unmittelbar neben den bildseitigen Enden der vom Lichtgeber kommenden Lichtleitfasern angeordnet sind,

dadurch gekennzeichnet,

daß die Lichtleitfasern (3) des Lichtgebers abschnittsweise parallel in einer Reihe nebeneinander in Form von flachen Bändern (12) angeordnet sind,

daß die Endteile dieser Bänder (12) im wesentlichen radial im Lichtgeber angeordnet sind,

und daß eine Vorrichtung zur zeitlichen Zuordnung des Lichteintritts in bestimmte Lichtleitfasern (17) vorgesehen ist.

2. Vorrichtung nach Anspruch 1,

dadurch gekennzeichnet

daß die lichtgeberseitigen Enden der Lichtleiterbänder (12) die Form eines Kreissegmentes aufweisen.

3. Vorrichtung nach Anspruch 1,

dadurch gekennzeichnet,

daß neben und/oder in Lücken zwischen zwei Lichtleitern (3), vorzugsweise zwischen zwei Lichtleiterbändern (12), Lichtsensoren oder zu Lichtsensoren führende Lichtleiter (17) angeordnet sind, wobei die Lichtsensoren Teil einer Steuerungsanlage für ein elektrische Impulse in ein Bild wandelndes Wiedergabegerät sind.

4. Vorrichtung nach Anspruch 1,

dadurch gekennzeichnet,

daß neben dem Lichtaustrittsende von Lichtleitern - (3) des Lichtgebers Licht in das Lichteintrittsende von Lichtleitern (15) des Lichtaufnehmers reflektierende Fläche (28, 29) neben dem abzutastenden Bild (5) angeordnet ist,

und daß an die Lichtimpulse in elektrische Signale (32, 33) wandelnden Vorrichtung eine elektrische Schaltung angeschlossen ist, welche einen Zählkreis und einen Schwellenwertkreis aufweist und eine Zuordnung von Bildflächenpunkten zu elektrischen Steuerimpulsen vollzieht.

5. Vorrichtung nach Anspruch 1,

dadurch gekennzeichnet,

daß die Abstände zwischen je zwei Lichtleiterbändern (12) unterschiedlich groß gewählt sind,

und daß an die Lichtimpulse in elektrische Signale wandelnde Vorrichtung eine elektrische Schaltung angeschlossen ist, welche aus den Abständen von Lichtimpulsfolgen eine zeitliche Zuordnung von Bildflächenpunkten zu elektrischen Steuerimpulsen vollzieht.

6. Vorrichtung nach Anspruch 3,

dadurch gekennzeichnet,

daß der Beleuchtungsfleck (22) im Bereich der Lichtleiter (3,19,2o) des Lichtgebers und der Sensoren bzw. der zu diesen führenden Lichtleiter in Drehrichtung einen kleineren Durchmesser als in zur Drehachse parallelen Richtung hat.

7. Vorrichtung nach Anspruch 1,

dadurch gekennzeichnet,

daß an mindestens drei Stellen in durch die Stirnseiten der Lichtleiter (3) des Lichtgebers gebildeten Polygon oder Kreis mehrere Lichtfleckpositionssensoren oder zu ihnen führende Lichtleiter (23) in Drehrichtung aufeinander folgend und in zur Spiegeldrehachse paralleler Richtung zunehmend versetzt gegen die Polygon-oder Kreisebene angeordnet sind, die vorzugsweise von einer Schlitzblende (25) bedeckt sind, deren Schlitz (26) mit der Richtung der Sollbahn des Beleuchtungsflecks (22) einen Winkel größer als 0° und kleiner als 90° bildet.

8. Vorrichtung nach Anspruch 4,

dadurch gekennzeichnet,

daß die Reflexionsflächen (33) metallische oder dielektrische Spiegelflächen (28,29) sind oder daß die Hilfsreflexionsflächen Grenzflächen von optisch dichteren zu optisch dünneren transparenten Medien sind, die der dort nicht reflektierte Teil des Lichtes in Richtung auf die zu beleuchtende Hauptbeleuchtungsfläche hin passiert.

9. Vorrichtung nach Anspruch 1,

dadurch gekennzeichnet,

daß die Lichtquelle (1) für die Bildbeleuchtung ein Laser und die Lichtquelle für die Messung der jeweiligen Lichtfleckposition ein zweiter Laser mit vom ersten Bildelementbeleuchtungslaser verschiedener Wellenlänge ist, dessen Strahlengang in den Strahlengang des ersten Lasers eingeführt ist,

und daß zwischen dem Lichtaufnehmer und den Lichtwandlern Lichtfilter für die Trennung der Lichtanteile unterschiedlicher Wellenlänge angeordnet sind.

1o. Vorrichtung nach Anspruch 1,

dadurch gekennzeichnet,

daß die zu beleuchtende Hauptfläche Teil einer elektrisch aufzuladenden Schicht eines Druckers oder eines Filmes oder Fotopapieres eines Plotters oder Lichtsatzgerätes ist.

FIG.1

FIG. 2

FIG. 3

FIG. 4

FIG. 5

FIG. 6

FIG.7

FIG.8

FIG.9

FIG.10

FIG.11